# EUROPEAN PATENT APPLICATION

(11) **EP 2 251 774 A1**
(43) Date of publication of application: **17.11.2010**
(21) Application number: 10160734.9
(22) Date of filing: 22.04.2010
(51) Int. Cl.: G06F 3/048, G06F 3/01, G06F 3/033

(54) **Rotary input device and electronic equipment**

(30) Priority: 22.04.2009 JP 2009104019
(71) Applicant: Funai Electric Co., Ltd., Daito-shi, Osaka 574-0013 (JP); Pro-tech Design Corporation, Osachi Okaya-shi Nagano 394-0081 (JP)
(72) Inventor: Nagashima, Kenji, Daito-shi Osaka 574-0013 (JP); Tsubota, Hirono, Daito-shi Osaka 574-0013 (JP); Suzuki, Takahiko, Okaya-shi Nagano 394-0081 (JP); Sako, Nobuyuki, Okaya-shi Nagano 394-0081 (JP); Kodaira, Takeshi, Okaya-shi Nagano 394-0081 (JP)
(74) Representative: Grünecker, Kinkeldey, Stockmair & Schwanhäusser Anwaltssozietät

(57) **Abstract**

Disclosed is a rotary input device, including: a rotary operation device; a storage section to store screen information correlated to a display order; a display control section for displaying the screen and selection items; an item switch instructing section to switch the selection item; and a screen switch instructing section to switch the displayed screen, wherein the selection item is switched in a predetermined selection order when the rotary operation device rotates in one direction and switched in a reverse order when the rotary operation device rotates in the other direction, and the first screen is switched to the second screen when the rotary operation device rotates in the one direction in a state in which a last first selection item is selected and switched to the first screen when the device rotates in the other direction in the state in which a top second selection item is selected.

## Description

### BACKGROUND OF THE INVENTION

### Field of the Invention

The present invention relates to a rotary input device and electronic equipment equipped with the rotary input device.

### Description of Related Art

A rotary input device has hitherto been known as an operation input device for operating electronic equipment, which rotary input device is equipped with a rotary operation device, such as a dial, to enable an operator to select a desired selection item among a plurality of selection items displayed in a display section in accordance with a rotation operation of the rotary operation device by an operator (see, for example, Japanese Patent Application Laid-Open Publications No. 2003-228455, No. 2003-345499, No. 2003-296006, and No. 2004-087307).

Now, the screens displayed in the display section of electronic equipment includes a main menu screen listing selection items for selecting respective categories, submenu screens, each listing selection items for selecting respective contents belonging to each of the categories, and the like.

The electronic equipment equipped with the rotary input device is, for example, configured to select a desired selection item by rotating the rotary operation device in a state in which the main menu screen is displayed, and to display a submenu screen corresponding to the desired selection item by determining the selection by depressing the rotary operation device.

That is, it is required to depress the rotary operation device not only to rotate the rotary operation device in order to switch the main menu screen under display to the submenu screen, and consequently the conventional electric equipment has the problem of the troublesomeness of the operation thereof.

### SUMMARY OF THE INVENTION

It is an object of the present invention to provide a rotary input device capable of switching a screen by a simple operation and electronic equipment equipped with the rotary input device.

According to a first aspect of the invention, there is provided a rotary input device, including: a rotary operation device rotatable around a shaft by receiving a rotation operation by an operator; a storage section to store screen information in association with a display order of displaying screens, the screen information pertaining to the screens including a first screen containing first selection items arranged in a matrix, and a second screen provided to each of the first selection items, each second screen containing second selection items arranged in a matrix, each of the second selection items belonging to a corresponding first selection item; a display control section to make a display section display one of the screens based on the screen information stored in the storage section screen, and to make the display section display a plurality of selection items arranged in a screen under display to be able to distinguish a selection item under selection from other selection items; an item switch instructing section to instruct the display control section to switch the selection item under selection according to rotation of the rotary operation device; and a screen switch instructing section to instruct the display control section to switch the screen under display according to the rotation of the rotary operation device in accordance with the display order stored in the storage section, wherein the item switch instructing section instructs to switch the selection item under selection in a predetermined selection order when the rotary operation device rotates in one direction between a clockwise direction or a counterclockwise direction, and instructs to switch the selection item under selection in an order reverse to the selection order when the rotary operation device rotates in the other direction between both the directions, and the screen switch instructing section instructs to switch the first screen under display to the second screen when the rotary operation device rotates in the one direction in a state in which a last first selection item among the plurality of first selection items arranged in the first screen under display is under selection, and instructs to switch the second screen under display to the first screen when the rotary operation device rotates in the other direction in the state in which a top second selection item among the plurality of second selection items arranged in the second screen under display is under selection.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a perspective view of a cellular phone handset equipped with a rotary input device of an embodiment to which the present invention is applied;
FIG. 2 is a block diagram showing the functional configuration of the cellular phone handset of the present embodiment;
FIG. 3 is a perspective view of the external appearance of a rotary input device of the present embodiment;
FIG. 4 is a sectional view taken along the line IV-IV of FIG. 3;
FIG. 5 is an exploded view of the rotary input device of the present embodiment;
FIG. 6 is a view showing an example of the main menu screen displayed in the display section with which the cellular phone handset of the present embodiment is equipped;
FIG. 7 is a view for describing an example of a selection order and a display order; and
FIG. 8 is a flow chart for describing the processing pertaining to the switches of a selection item under selection and a screen under display by the cellular phone handset of the present embodiment.

### DETAILED DESCRIPTION OF THE PREFERRED EMBODIMENTS

In the following, an embodiment of the present invention will be described in detail by reference to the accompanying drawings. Incidentally, the scope of the present invention is not limited to the shown examples.

In the present embodiment, it is intended to describe the present embodiment by illustrating a cellular phone handset performing verbal communication by wireless communication as electronic equipment equipped with a rotary input device according to the present invention.

Incidentally, in the following description, it is supposed that the side on which a rotary input device 10 and a display panel 331 of a display section 33 are arranged is treated as the front side, and the side opposed to the side on which the rotary input device 10 and the display panel 331 are arrange is treated as the back side in a cellular phone handset 1 of the present embodiment. Then, the side on which the display panel 331 is arranged is treated as the top side; the side on which the rotary input device 10 is arranged is treated as the bottom side; and the direction perpendicular to both of the front-back direction and the top-bottom direction is treated as the left-right direction.

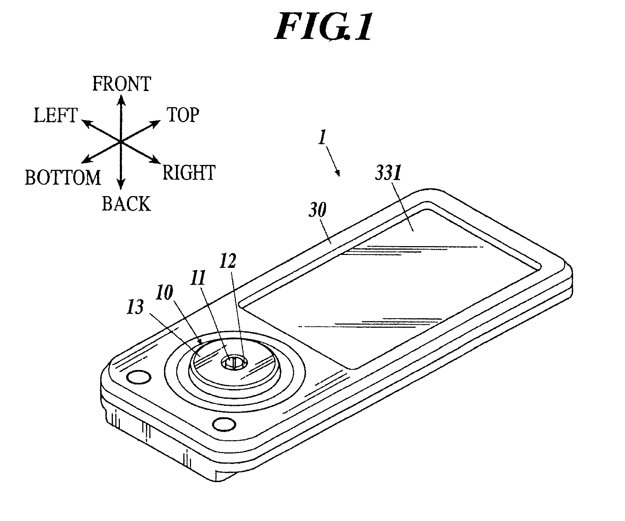

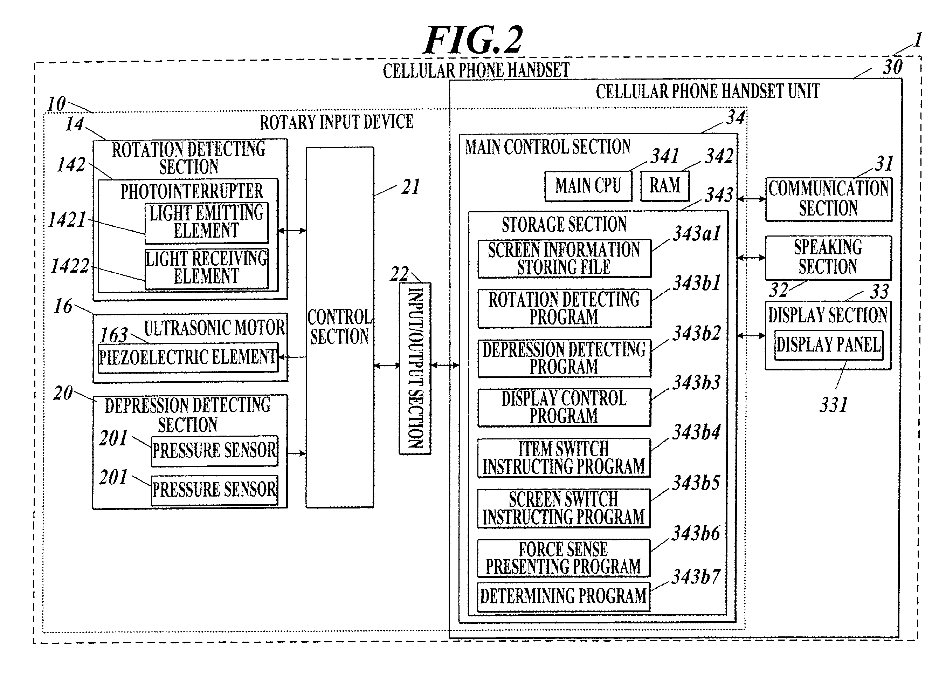

The cellular phone handset 1 is composed to include, for example, as shown in FIGS. 1 and 2, the rotary input device 10 for an input operation by an operator, and a cellular phone handset unit 30 operated by the rotary input device 10.

### (Rotary Input Device)

First, the rotary input device 10 of the present embodiment is described.

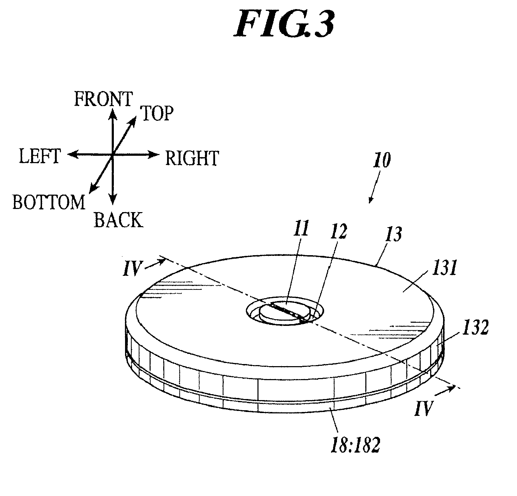

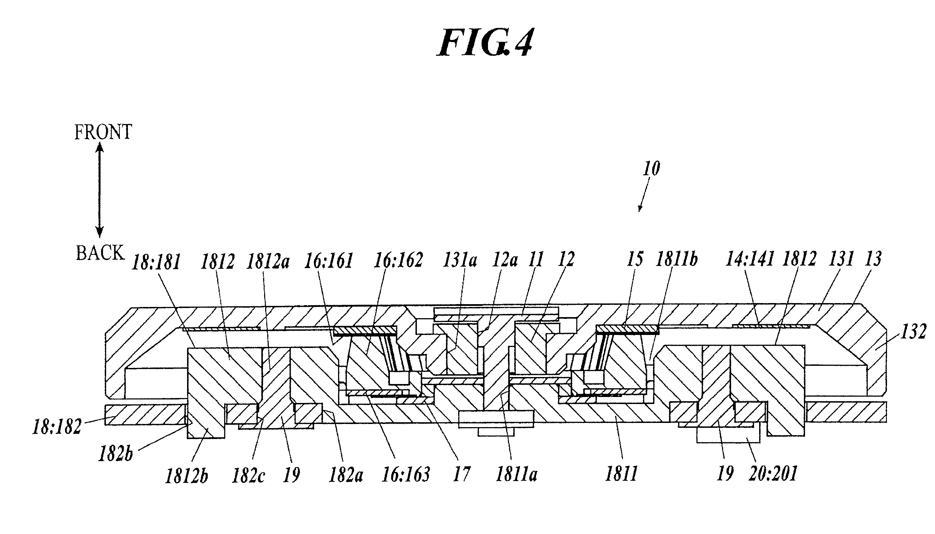

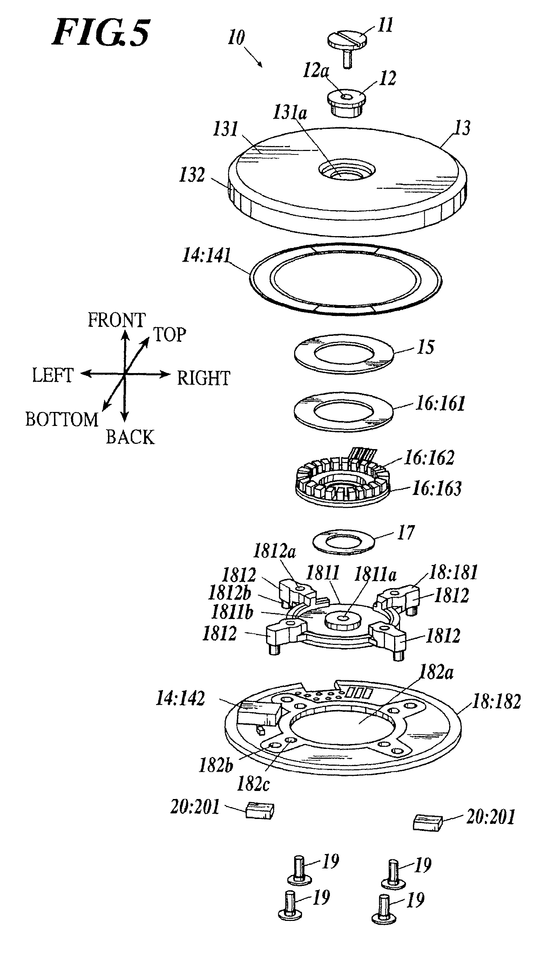

The rotary input device 10 is equipped with, for example, as shown in FIGS. 2-5, a rotary operation device 13, which an operator can manually rotate, and a supporting stand 18, which is provided on the back side of the rotary operation device 13 to support the rotary operation device 13 rotatably. The whole shape of the rotary input device 10 is formed into an almost a disk shape.

The rotary operation device 13 is equipped with a circular front surface section 131 including an aperture section 131a at the center thereof, and a circumferential surface section 132 projecting from the edge portion of the front surface section 131 to the back over the whole circumference. The rotary operation device 13 is provided at a position to cover the front side of the supporting stand 18, and consequently the front surface section 131 and the circumferential surface section 132 are form the front surface and the circumferential surface of the rotary input device 10, respectively.

The front surface section 131 forms the operation surface for a rotation operation by an operator, and the operator performs an input operation into the cellular phone handset unit 30 by rotating the rotary operation device 13 while pressing down a point of the front surface section 131 with a fingertip or while pinching the circumferential surface section 132.

The rotary operation device 13 may be formed of, for example, a material having a radiation performance, such as aluminum, or a material having a strong resistance property to an impact from the outside, alternatively may be formed of a resin or the like.

The supporting stand 18 is equipped with a base 181 and a polychlorinated biphenyl (PCB) substrate 182 connected to the base 181. By providing the supporting stand 18 at a position to cover an aperture on the back side of the rotary operation device 13, the supporting stand 18 forms the back surface of the rotary input device 10.

The base 181 is equipped with an almost doughnut disk-like pedestal section 1811 having an aperture at the center thereof and four extension sections 1812 extending toward the outside from the peripheral portion of the pedestal section 1811.

Each of the extension sections 1812 is provided with a threaded hole 1812a for attaching a screw and a projection 1812b formed on the back surface further outward than the threaded hole 1812a to extend toward the rear.

The base 181 is made of a material, such as polycarbonate.

The PCB substrate 182 is formed in a tabular ring having almost the same outer diameter as that of the rotary operation device 13, and the pedestal section 1811 of the base 181 is fit into an aperture section 182a at almost the center of the PCB substrate 182. Moreover, the PCB substrate 182 is provided with four attaching holes 182b for attaching the projections 1812b provided on the back surface of each of the extension sections 1812 of the base 181 to project backward are formed in the PCB substrate 182 correspondingly to the projections 1812b, respectively. Then, the PCB substrate 182 and the base 181 are integrally connected to each other by attaching the pedestal section 1811 of the base 181 to the aperture section 182a of the PCB substrate 182, and by fitting the projections 1812b of the base 181 into the attaching holes 182b of the PCB substrate 182, respectively.

Moreover, four hole sections 182c, each having a diameter slightly larger than that of each of the threaded holes 1812a of the base 181, are formed in the PCB substrate 182 at positions overlapping the threaded holes 1812a, respectively, correspondingly to the threaded holes 1812a, respectively. A screw 19 is screwed from the back side of the PCB substrate 182 into each of the threaded holes 1812a of the base 181 through each of the hole sections 182c of the PCB substrate 182, and thereby the PCB substrate 182 and the base 181 are fixed to each other.

Furthermore, a bearing 12 is provided to be arranged on the inner circumferential surface of the aperture section 131a of the front surface section 131 with which the rotary operation device 13 is equipped, a screw 11 to function as a rotation shaft of the rotary operation device 13 is inserted into a through-hole 12a at the center of the bearing 12. Then, the screw 11 and the supporting stand 18 are fix to each other by inserting the screw 11 into the through-hole 12a of the bearing 12 from the front side of the rotary operation device 13 and further by screwing the back end part of the screw 11 projecting backward into the female screw formed on the inner circumferential surface of the aperture 1811a at the center of the pedestal section 1811 with which the base 181 is equipped. Hereby, the rotary operation device 13 is connected to the supporting stand 18 rotatably around the screw 11.

Moreover, a space is formed between the rotary operation device 13 and the supporting stand 18, and the space contains a rotation detecting section 14 detecting a rotation angle of the rotary operation device 13, an ultrasonic motor 16 as a rotation driving section to rotate the rotary operation device 13, a depression detecting section 20 detecting the depression of the rotary operation device 13 in the axial direction (front-back direction), a control section 21 performing the integrated control of the rotary input device 10, an input/output section 22 performing the transmission and the reception of various signals with the cellular phone handset unit 30, and the like, in an arranged state.

The rotation detecting section 14 is composed of, for example, a ring-like code wheel 141, and a photointerrupter 142 detecting the rotation angle displacement of the code wheel 141.

The code wheel 141 is fixated onto the inner surface (back surface) of the front surface section 131, with which the rotary operation device 13 is equipped, in the state in which the center of the code wheel 141 agrees with the center of the rotary operation device 13, and the code wheel 141 rotates in conjunction with the rotary operation device 13. A light reflecting surface is printed on the back surface of the code wheel 141 at a predetermined pitch of two detection patterns of an A phase and a B phase along a circumferential direction.

The photointerrupter 142 is a reflection type photointerrupter composed of a light emitting element 1421, such as a light emitting diode (LED), and a light receiving element 1422, such as a photo integrated circuit (IC). The photointerrupter 142 is mounted at a position opposed to the code wheel 141 on the front surface of the PCB substrate 182, and is connected to the control section 21.

The light receiving element 1422 includes at least two light receiving surfaces and is configured to output the detection signals of the A phase and the B phase, which differs from each other by 90 degrees.

The photointerrupter 142 receives the reflection light of a light emitted from the light emitting element 1421 toward the code wheel 141 with the light receiving element 1422, and counts the reflection light. Thereby, the photointerrupter 142 detects the rotation quantity and the rotation direction of the rotary operation device 13, and outputs the detection results to the control section 21. The control section 21 outputs the detection results from the photointerrupter 142 to the cellular phone handset unit 30 through the input/output section 22, and then the cellular phone handset unit 30 specifies the rotation angle of the rotary operation device 13 on the basis of the detection results.

The ultrasonic motor 16 is composed of, for example, a piezoelectric element 163, a ring-like stator (vibrating body) 162 and a rotor 161 touching the front surface of the stator 162. The ultrasonic motor 16 drives the rotary operation device 13 in accordance with a control signal from the control section 21 to rotate the rotary operation device 13 around the shaft thereof.

The stator 162 is fit into a ring-like concave portion 1811b formed on the front surface of the pedestal section 1811 with which the base 181 is equipped, and is fixed to the base 181 with a tabular ring-like double-coated adhesive tape 17.

The stator 162 is equipped with a plurality of convex parts provided to be arranged along the circumferential direction of the stator 162 at the front part thereof, and the stator 162 is equipped with the plurality of piezoelectric elements 163, which generates vibrational energy in response to an application of a drive voltage based on a drive signal and is arranged along the circumferential direction of the stator 162 on the back surface thereof.

The rotor 161 is made of a material, such as high-molecular polyethylene, and has a tabular ring-like shape.

The rotor 161 is provided to be arranged at a position sandwiched between the stator 162 and the rotary operation device 13 on the inner circumference side of the code wheel 141, and is fixed to the rotary operation device 13 with a tabular ring-like double-coated adhesive tape 15 in the state of being arranged so that the center of the rotor 161 agrees with are the center of the rotary operation device 13. The rotor 161 rotates in conjunction with the rotary operation device 13. That is, the front surface of the rotor 161 is adhered to the back surface of the double-coated adhesive tape 15 adhered on the back surface of the front surface section 131, with which the rotary operation device 13 is equipped, and the back surface of the rotor 161 is touched to the convex parts of the stator 162. The back surface of the rotor 161 is made to have a high friction coefficient, and is configured to rotate in the counter direction to the direction of a progressive wave produced by a vibration of the stator 162 touched to the back surface.

The piezoelectric element 163 is connected to the control section 21. When a predetermined drive voltage is applied from the control section 21 to the piezoelectric element 163, the whole body of the stator 162 is vibrated by a ultrasonic vibration of the piezoelectric element 163, and the progressive wave is transmitted to the rotor 161. By this, the rotor 161 rotates. Then, the rotary input device 10 is configured to rotate the rotary operation device 13 by the transmission of the rotary force of the rotor 161 to the rotary operation device 13. Furthermore, the rotary input device 10 is configured to be able to freely set the magnitude and the rotation direction of the rotary force of the rotary operation device 13 caused by the ultrasonic vibration of the piezoelectric element 163 by controlling the drive frequency of the drive voltage applied to the piezoelectric element 163.

The depression detecting section 20 is equipped with two pressure sensors 201 fixated at two positions on the left side and right side, respectively, on the back surface of the PCB substrate 182, and is connected to the control section 21.

The depression detecting section 20 detects a depression of the rotary operation device 13 in the axial direction (front-back direction) thereof with each of the pressure sensors 201 to output the detection results to the control section 21. The control section 21 outputs the detection results from the depression detecting section 20 to the cellular phone handset unit 30 through the input/output section 22, and the cellular phone handset unit 30 specifies the depressed position of the rotary operation device 13 and the depression force at the time of the depression of the rotary operation device 13 on the basis of the detection results.

As the pressure sensors 201, for example, a resistive film type pressure sensor, a diffusion type one, a film formation type one, an electrical capacitance type one, and a mechanical type one can be used.

The control section 21 is configured to include, for example, a central processing unit (CPU), a random access memory (RAM), and a storage section.

The control section 21 is connected to the cellular phone handset unit 30 through the input/output section 22. The control section 21 performs the centralized control, of the operation of each section constituting the rotary input device 10 in accordance with a control signal input from the cellular phone handset unit 30, and outputs a signal input from each section constituting the rotary input device 10 to the cellular phone handset unit 30.

To put it concretely, the control section 21 is connected to the photointerrupter 142 of the rotation detecting section 14. The control section 21 instructs the light emitting element 1421 of the photointerrupter 142 to emit a light in accordance with a control signal input from the cellar phone handset 30 through the input/output section 22, and outputs a detection signal, input from the light receiving element 1422 of the photointerrupter 142, as a detection result to the cellular phone handset unit 30 through the input/output section 22. Hereby, the cellular phone handset unit 30 specifies a rotation angle of the rotary operation device 13.

Moreover, the control section 21 is connected to the ultrasonic motor 16, and outputs a predetermined drive signal to the piezoelectric element 163 of the ultrasonic motor 16 in accordance with a control signal input from the cellular phone handset unit 30 through the input/output section 22. Hereby, the rotary operation device 13 rotates around the shaft thereof.

Moreover, the control section 21 is connected to the depression detecting section 20, and outputs a detection signal as the detection results input from the respective pressure sensors 201 of the depression detecting section 20 to the cellular phone handset unit 30 through the input/output section 22. Hereby, the cellular phone handset unit 30 can specify the depressed position of the rotary operation device 13 and the depression force at the time of the depression of the rotary operation device 13.

The input/output section 22 is connected to the main control section 34 of the cellular phone handset unit 30. The input/output section 22 sometimes outputs a control signal input from the main control section 34 to the control section 21, and sometimes outputs a signal input from the control section 21 to the main control section 34.

### (Cellular Phone Handset Unit)

Next, the cellular phone handset unit 30 of the present embodiment will be described.

The cellular phone handset unit 30 is configured to be equipped with, for example, as shown in FIG. 2, a communication section 31, which is equipped with an antenna to perform the transmission and the reception of a wireless signal with external equipment, a speaking section 32, which is equipped with a speaker and a microphone to perform the input and the output of a sound, the display section 33, which is equipped with the display panel 331 and displays various screens on the display panel 331, and the main control section 34 performing the integrated control of the cellular phone handset 1.

Incidentally, because publicly known techniques are used for the communication section 31 and the speaking section 32 for realizing the verbal communication function with the external equipment by using wireless signals, the details of the communication section 31 and the speaking section 32 are omitted.

The display section 33 is configured to be equipped with, for example, the display panel 331, such as a liquid crystal display (LCD) panel, and performs given display processing in accordance with a control signal input from the main control section 34.

The main control section 34 is configured to be equipped with, for example, as shown in FIG. 2, a main CPU 341, a RAM 342, and a storage section 343.

The main CPU 341 performs, for example, various control operation in accordance with various processing programs, which are stored in the storage section 343 and are for the use of the cellular phone handset 1.

The RAM 342 is equipped with, for example, a program storing region for expanding a processing program to be executed by the main CPU 341, and a data storing region for storing input data and a processing result produced at the time of the execution of the processing program.

The storage section 343 stores, for example, a system program executable in the cellular phone handset 1, various processing programs executables on the system program, data to be used at the time of the execution of these various processing programs, and the data of the processing result of operation processing of the main CPU 341. Incidentally, the programs are stored in the storage section 343 in the form of computer-readable program codes.

To put it concretely, the storage section 343 stores, for example, as shown in FIG. 2, a screen information storing file 343a1, a rotation detecting program 343b1, a depression detecting program 343b2, a display control program 343b3, an item switch instructing program 343b4, a screen switch instructing program 343b5, a force sense presenting program 343b6, and a determining program 343b7.

The screen information storing file 343a1, as a storage section, stores screen information pertaining to screens in association with display orders of displaying the screens, which screens include a "main menu screen" as a first screen, in which first selection items are arranged in a matrix, and a "submenu screen" as a second screen, in which second selection items belonging to one of the first selection items in a matrix.

The respective functions of the cellular phone handset 1 are classified into categories of "telephone," "mail," "address book" and the like, and the cellular phone handset unit 30 is configured to be able to select the respective categories in the "main menu screen," and select the respective functions in a "submenu screen."

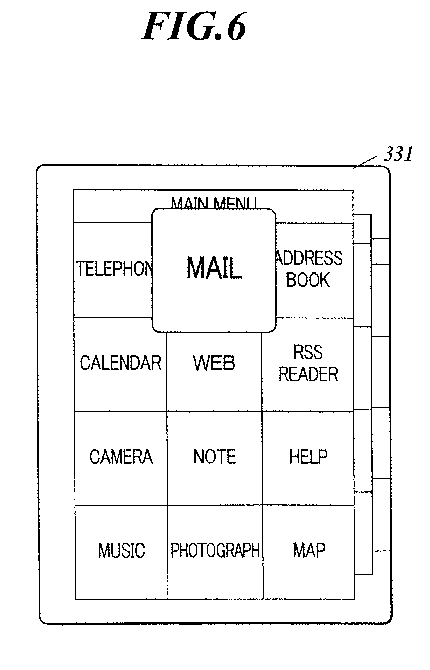

To put it concretely, the first selection items are items indicating the categories, and, for example, icons indicating the respective first selection items, such as "telephone," "mail," and "address book," are arranged in a matrix of 4 x 3 in the "main menu screen," as shown in FIG. 6.

Moreover, the second selection items are items indicating the functions of the cellular phone handset 1. As the second selection items belonging to the first selection item "telephone," for example, "transmission history," and "reception history" can be given, and as the second selection items belonging to the first selection item "mail," "reception mail" and "transmission mail" can be given. The "submenu screens" are provided to each of the first selection items, and, for example, the icons indicating the respective second selection items, such as "transmission history" and "reception history," are arranged in the matrix of 4 x 3 in the submenu screens corresponding to the first selection item "telephone."

The display order of displaying screens is the order of displaying screens in accordance with the rotations (the rotations in forward direction (clockwise)) of the rotary operation device 13 by an operator, or the order of displaying screen in accordance with the depressions (the depressions at a first position (left side part)) of the rotary operation device 13 by the operator.

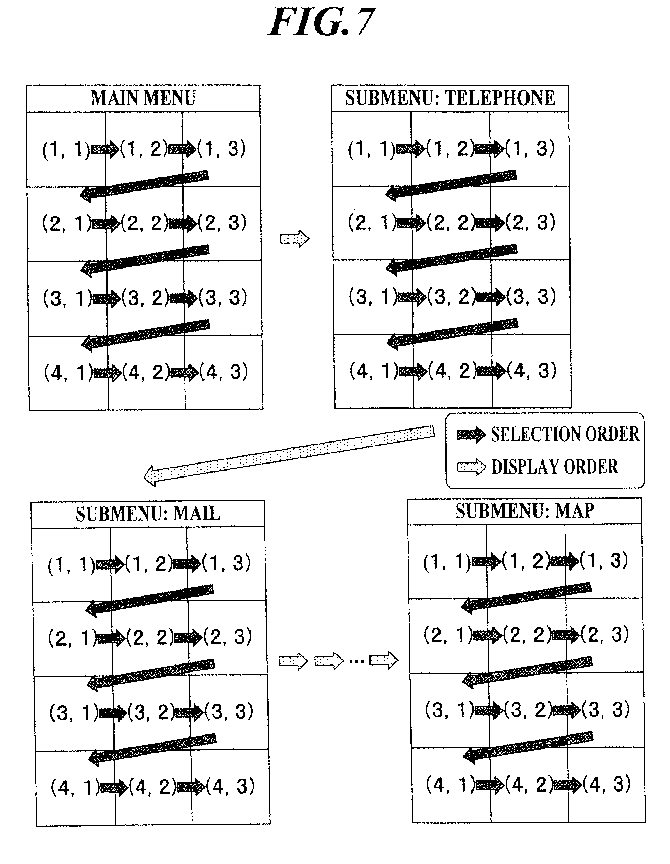

To put it concretely, if the positions in which the selection items are arranged are expressed by (row, column) as shown in FIG. 7, the display order is, for example, the order indicated by arrows in FIG. 7 ("main menu screen" → submenu screen ("submenu screen (telephone)") corresponding to the first selection item arranged at (1, 1) → submenu screen ("submenu screen (mail)") corresponding to the first selection item arranged at (1, 2) → submenu screen ("submenu screen (address book)") corresponding to the first selection item arranged at (1, 3) → submenu screen ("submenu screen (calendar)") corresponding to the first selection item arranged at (2, 1) → submenu screen ("submenu screen (WEB)") corresponding to the first selection item arranged at (2, 2) → submenu screen ("submenu screen (RSS reader)") corresponding to the first selection item arranged at (2, 3) → submenu screen ("submenu screen (camera)") corresponding to the first selection item arranged at (3, 1) → submenu screen ("submenu screen (note)") corresponding to the first selection item arranged at (3, 2) → submenu screen ("submenu screen (help)") corresponding to the first selection item arranged at (3, 3) → submenu screen ("submenu screen (music)") corresponding to the first selection item arranged at (4, 1) → submenu screen ("submenu screen (photograph)") corresponding to the first selection item arranged at (4, 2) → submenu screen ("submenu screen (map)") corresponding to the first selection item arranged at (4, 3)).

The rotation detecting program 343b1 enables the main CPU 341 to realize the function of calculating a rotation angle of the rotary operation device 13 on the basis of the detection results of the rotation detecting section 14, which detection results are input from the control section 21 through the input/output section 22.

To put it concretely, the main CPU 341, for example, sets the rotation angle of the rotary operation device 13 at the time point of focusing on an initial position (for example, the first selection item (first selection item "telephone") arranged at (1, 1)) as "0 degree." When the rotary operation device 13 clockwise rotates by 90 degrees from the time point, the main CPU 341 calculates the rotation angle of the rotary operation device 13 as "+ 90 degrees." When the rotary operation device 13 counterclockwise rotates by 90 degrees from the time point, the main CPU 341 calculates the rotation angle of the rotary operation device 13 as "-90 degrees." Moreover, when the rotary operation device 13 counterclockwise rotates by 20 degrees from the time point after clockwise rotating by 90 degrees, the main CPU 341 calculates the rotation angle of the rotary operation device 13 as "+70 degrees."

In the following, a selection item in focus is referred to as a "selection item under selection."

Incidentally, a detection section is composed of the rotation detecting section 14 and the main CPU 341 executing the rotation detecting program 343b1.

The depression detecting program 343b2 enables the main CPU 341 to realize the function of calculating a depressed position of the rotary operation device and the depression force of the rotary operation device 13 at the time of the depressing of thereof on the basis of the detection results of the depression detecting section 20 input from the control section 21 through the input/output section 22.

To put it concretely, the main CPU 341 performs a vector operation to calculate the depressed position and the depression force on the basis of the respective detection results from the pressure sensors 201 fixated on both the left side and the right side, respectively, on the back surface of the PCB substrate 182.

Incidentally, the detection section is configured of the depression detecting section 20 and the main CPU 341 executing the depression detecting program 343b2.

The display control program 343b3 enables the main CPU 341 to realize the function of displaying a screen based on screen information stored in the screen information storing file 343a1 in the display section 33, and of displaying a plurality of selection items arranged in the screen under display (the screen displayed in a large size at the center of the display panel 331) to be able to discriminate between the selection item under selection and the other selection items (unselected selection items).

To put it concretely, the main CPU 341 displays, for example, a screen of a "N^{th}" display order at the center of the display panel 331, and displays a screen of a "(N + 1)^{th}" display order to be visible from the right side on the back of the screen of the "N^{th}" display order in a size smaller than that of the screen of the "N^{th}" order, and further displays a screen of a "(N + 2)^{th}" display order to be visible from the right side on the back of the screen of the "(N + 1)^{th}" display order in a size smaller than that of the screen of the "(N + 1)^{th}" display order. Furthermore, the main CPU 341 displays a screen of a "(N - 1)^{th}" display order to be visible from the left side on the back of the screen of the "N^{th}" display order in a size smaller than that of the screen of the "N^{th}" display order, and displays a screen of a "(N - 2)^{th}" display order to be visible from the left side on the back of the screen of the "(N - 1)^{th}" display order in a size smaller than that of the screen of the "(N - 1)^{th}" display order.

For example, in the display panel 331 shown in FIG. 6, the screen under display is the screen of a "first" display order ("main menu screen") and the screens of a "(N - 1)^{th}" display order and a "(N - 2)^{th}" display order do not exist, and consequently only the screens of a "(N + 1)^{th}" display order and a "(N + 2)^{th}" display order are displayed to be visible from the back of the "main menu screen.".

Moreover, the main CPU 341 displays the selection item under selection to be able to discriminate the selection item under selection from the other selection items by, for example, enlarging the magnitude of the icon showing the selection item under selection to be larger than that of the icons showing the other selection items.

For example, in the screen ("main menu screen") under display on the display panel 331 shown in FIG. 6, the first selection item "mail" is under selection.

The main CPU 341 functions as a display control section by executing this display control program 343b3.

The item switch instructing program 343b4 enables the main CPU 341 to realize the function of instructing the main CPU 341 executing the display control program 343b3 to switch the selection item under selection according to a rotation of the rotary operation device 13 on the basis of a rotation angle of the rotary operation device 13 calculated (detected) by the main CPU 341 executing the rotation detecting program 343b1.

To put it concretely, when the detected rotation angle of the rotary operation device 13 increases, the main CPU 341 judges that the rotary operation device 13 has rotated in the forward direction (clockwise), and performs the instruction of the switching of the selection item under selection in a predetermined selection order. When the detected rotation angle of the rotary operation device 13 decreases, the main CPU 341 judges that the rotary operation device 13 has rotated in the reverse direction (counterclockwise), and performs the instruction of the switching of the selection item under selection in the reverse order to the selection order.

Incidentally, the selection order is, for example, the order shown by arrows in FIG. 7 (the order of (1, 1) → (1, 2) → (1, 3) → (2, 1) → (2, 2) → (2, 3) → (3, 1) → (3, 2) → (3, 3) → (4, 1) → (4, 2) → (4, 3)).

Here, the main CPU 341 is configured to perform the instruction of the switching of the selection item under selection when the detected rotation angle of the rotary operation device 13 becomes a predetermined item switching angle.

The item switching angle is, for example, a multiple of 30 degrees, and is an angle other than a screen switching angle (described below). Hereby, the cellular phone handset is configured to be able to select all the 12 selection items arranged in one screen during one rotation of the rotary operation device 13.

The main CPU 341 functions as an item switch instructing section by executing this item switch instructing program 343b4.

The screen switch instructing program 343b5 enables the main CPU 341 to realize the function of instructing the main CPU 341 executing the display control program 343b3 to switch the screen under selection in accordance with a display order stored in the screen information storing file 343a1 according to a rotation of the rotary operation device 13 on the basis of a rotation angle of the rotary operation device 13 detected by the main CPU 341 executing the rotation detecting program 343b1.

To put it concretely, when the detected rotation angle of the rotary operation device 13 increases, the main CPU 341 judges that the rotary operation device 13 has rotated in the forward direction (clockwise), and performs the instruction of the switching of the screen under display in a display order stored in the screen information storing file 343a1. When the detected rotation angle of the rotary operation device 13 decreases, the main CPU 341 judges that the rotary operation device 13 has rotated in the reverse direction (counterclockwise), and performs the instruction of the switching of the switching of the screen under display in the reverse order to the selection order.

To put it more concretely, when the rotary operation device 13 clockwise rotates in the state in which the screen under display (the screen displayed at the center of the display panel 331 in a large size) is the screen of the "N^{th}" display order and the last selection item among a plurality of selection items arranged in the screen is under selection, then the main CPU 341 performs the instruction of switching the screen under display from the screen of the "N^{th}" display order to the screen of "(N + 1)^{th}" display order. Moreover, when the rotary operation device 13 counterclockwise rotates in the state in which the screen under display is the screen of the "N^{th}" display order and the top selection item among the plurality of selection items arranged in the screen is under selection, then the main CPU 341 performs the instruction of switching the screen under display from the screen of the "N^{th}" display order to the screen of "(N - 1)^{th}" display order.

Incidentally, if the number of the selection items arranged in one screen is M, the top selection item indicates the selection item of the "first" selection order, and the last selection item indicates the selection item of the "M^{th}" selection order (the selection item of the "12^{th}" selection order in the present embodiment).

That is, if the rotary operation device 13 clockwise rotates in the state in which the last first selection item (the first selection item arranged at (4, 3)) among the plurality of first selection items arranged in the "main menu screen" under display is under selection, then the main CPU 341 performs the instruction of the switching of the "main menu screen" under display to a "submenu screen (telephone)." If the rotary operation device 13 counterclockwise rotates in the state in which the top second selection item (the second selection item arranged at (1, 1)) among the plurality of second selection items arranged in the "submenu screen (telephone)" under display is under selection, then the main CPU 341 performs the instruction of the switching of the "submenu screen (telephone)" under display to the "main menu screen."

Incidentally, the selection item under selection is also switched when the screen under display is switched. When the screen under display is switched from the screen of the "N^{th}" display order to the screen of the "(N + 1)^{th}" display order, the selection item under selection is switched from the last selection item in the screen of the "N^{th}" display order to the top selection item in the screen of the "(N + 1)^{th}" display order. When the screen under display is switched from the screen of the "N^{th}" display order to the screen of the "(N - 1)^{th}" display order, the selection item under selection is switched from the top selection item in the screen of the "N^{th}" display order to the last selection item in the screen of the "(N + 1)^{th}" display order.

Here, when the detected rotation angle of the rotary operation device 13 becomes a predetermined screen switching angle, the main CPU 341 is configured to perform the instruction of the switching the screen under display.

The screen switching angle is, for example, a multiple of 360 degrees. Hereby, the screen is set to be switched every rotation of the rotary operation device 13.

Moreover, the screen switch instructing program 343b5 enables the main CPU 341 to realize the function of performing the instruction of the switching of the screen under display to next screen when the main CPU 341 executing the depression detecting program 343b2 calculates (detects) the depression of a predetermined first position (the left side part of the rotary operation device 13) of the rotary operation device 13, and of performing the switching of the screen under display to the preceding screen when the main CPU 341 detects the depression of a predetermined second position (the right side part of the rotary operation device 13) of the rotary operation device 13.

To put it concretely, the main CPU 341, for example, performs the instruction of the switching of the screen under display from the screen of the "N^{th}" display order to the screen of the "(N + 1)^{th}" display order at the time of the detection of the depression of the left side part of the rotary operation device 13, and performs the instruction of the switching of the screen under display from the screen of the "N^{th}" display order to the screen of the "(N - 1)^{th}" display order at the time of the detection of the depression of the right side part of the rotary operation device 13.

Here, the main CPU 341 is configured to perform the instruction of the switching of the screen under display at a screen switching speed according to the magnitude of a depression force calculated (detected) by the main CPU 341 executing the depression detecting program 343b2 when the left side of the right side of the rotary operation device 13 is depressed for a long time.

To put it concretely, the main CPU 341 is configured, for example, to perform the instruction of the switching of the screen under display at a first screen switching speed for a long period depression of the left side part of the rotary operation device 13 when the depression of the left side part is detected and the detected depression force is less than a first switching threshold value, and to perform the instruction of the switching of the screen under display at a second screen switching speed faster than the second screen switching speed for a long period depression of the left side part when the detected depression force is equal to or more than the first switching threshold value and less than a second switching threshold value (first switching threshold value < second switching threshold value), and further to perform the instruction of the switching of the screen under display at a third screen switching speed faster than the second screen switching speed for a long period depression of the left side part when the detected depression force is equal to or more than the second switching threshold value.

The case of a long period depression of the right side part of the rotary operation device 13 is similar to the case of the long period depression of the left side.

The main CPU 341 functions as a screen switch instructing section by executing this screen switch instructing program 343b5.

The force sense presenting program 343b6 enables the main CPU 341 to realize the function of presenting a force sense to an operator through the rotary operation device 13 by inputting a control signal to the control section 21 through the input/output section 22 to make the control section 21 output a drive signal to the piezoelectric element 163 of the ultrasonic motor 16.

Here, the "force sense" does not indicate a simple the sense of touch caused by a vibration, but indicates the sense of a weight weighing on a finger at the time of rotating the rotary operation device 13 in the present invention. To put it concretely, the "force sense" means the sense of feeling of a rotation to be light or to be heavy.

When a detected rotation angle of the rotary operation device 13 reaches the item switching angle, the main CPU 341 present the force sense to an operation to give an operating feeling to the operator, and thereby makes the operator perceive the switching of the selection item under selection of selection item.

Moreover, the main CPU 341 presents a force sense when the detected rotation angle of the rotary operation device 13 reaches the screen switching angle, and thereby gives an operator an operating feeling to make the operator perceive the switching of the screen under display.

Here, the main CPU 341 is configured to change the way of presenting the force sense in order that, for example, an operator can perceive the distinction between the case where the rotation angle of the rotary operation device 13 reaches the item switching angle and the case where the rotation angle reaches the screen switching angle.

To put it concretely, the main CPU 341 is configured to present a force sense by, for example, a combination of applying a rotary force in the normal rotation direction to the rotary operation device 13, applying a rotary force in the reverse rotation direction, and stopping the applying of the rotary force when the detected rotation angle of the rotary operation device 13 reaches the item switching angle. The main CPU 341 gives a force sense by a combination of applying a rotary force in the normal rotation direction to the rotary operation device 13 and stopping the applying of the rotary force when the detected rotation angle of the rotary operation device 13 reaches the screen switching angle.

For example, when the detected rotation angle of the rotary operation device 13 reaches the item switching angle, the main CPU 341 applies the rotary force in the reverse rotation direction to the rotary operation device 13 to rotate the rotary operation device 13 in the reverse rotation direction by a predetermined angle in a predetermined time. After that, the main CPU 341 stops the applying of the rotary force, and then applies a rotary force in the normal rotation direction to the rotary operation device 13. Thereby, the CPU 341 rotates the rotary operation device 13 in the normal rotation direction by the predetermined angle in the predetermined time, and then the main CPU 341 stops the applying of the rotary force. The main CPU 341 repeatedly performs the series of force sense presenting processing more than once, and thereby the main CPU 341 presents the force sense.

Moreover, for example, when the detected rotation angle of the rotary operation device 13 reaches the screen switching angle, the main CPU 341 applies the rotary force in the normal rotation direction to the rotary operation device 13, and rotates the rotary operation device 13 in the normal rotation direction by the predetermined angle for the predetermined time, and then the main CPU 341 stops the applying of the rotary force. The main CPU 341 performs the series of the force sense presenting processing once, and thereby presents the force sense.

Here, the normal rotation direction indicates the clockwise direction when the rotary operation device 13 performs a clockwise rotation operation by an operator, and indicates the counterclockwise direction when the rotary operation device 13 performs a counterclockwise rotation operation by the operator. Moreover, the reverse rotation direction indicates the counterclockwise direction when the rotary operation device 13 performs a clockwise rotation operation by an operator, and indicates the clockwise direction when the rotary operation device 13 performs a counterclockwise rotation operation by the operator.

Moreover, the main CPU 341 is configured to present the force sense by the combination of applying the rotary force in the reverse rotation direction to the rotary operation device 13 and stopping the applying of the rotary force in the following two cases: the case (first case) where the rotary operation device 13 is rotated in the forward direction (clockwise) by an operation of an operator in the state in which the screen ("submenu screen (map)") of the last display order is being under display and the last selection item (the second selection item arranged at the position (4, 3)) among the plurality of selection items arranged in the screen is being under selection; and the case (second case) where the rotary operation device 13 is rotated in the reverse direction (counterclockwise) by an operation of an operator in the state in which the screen ("main menu screen") of the first display order is being under display and the top selection item (the first selection item arranged at the position (1, 1)) among the plurality of selection items arranged in the screen is being under selection.

For example, in the first case, the main CPU 341 presents the force sense to give an operator a breaking feeling by once performing a series of force sense presenting processing of applying the counterclockwise rotary force to the rotary operation device 13 to rotate the rotary operation device 13 counterclockwise by a predetermined angle in a predetermined time, and then stopping the applying of the rotary force. Thereby, the main CPU 341 makes the operator perceive the fact that the screen under display (selection item under selection) is not switched even if the rotary operation device 13 is made to be rotated in the same direction (clockwise) any longer.

Moreover, for example, in the second case, the main CPU 341 presents the force sense to give an operator a breaking feeling by once performing a series of force sense presenting processing of applying the clockwise rotary force to the rotary operation device 13 to rotate the rotary operation device 13 clockwise by a predetermined angle in a predetermined time, and then stopping the applying of the rotary force. Thereby, the main CPU 341 makes the operator perceive the fact that the screen under display (selection item under selection) is not switched even if the rotary operation device 13 is made to be rotated in the same direction (clockwise) any longer.

Incidentally, in both of the first case and the second case, the rotary force to be applied, the time for rotating the rotary operation device 13, and the angle thereof may be the same in both the cases, or may be different from each other in both the cases.

Moreover, the main CPU 341 is configured to present the force sense by applying the clockwise rotary force to the rotary operation device 13, applying the counter clockwise rotary force thereto, and stopping the applying of the rotary force thereto, in the case where the depression of the left side part of the rotary operation device 13 is detected, the case where the depression of the right side part thereof is detected, and the case where a third position (the central part of the rotary operation device 13) thereof is depressed (including the case where the screw 11 is depressed).

For example, if the depression of the left side part, the right side part, or the central part of the rotary operation device 13 is detected, the main CPU 341 presents a force sense to give the operator an operation feeling, and thereby makes the operator perceive the switching of the screen under display or makes the operator perceive the determination of a selection by repeatedly performing a series of the force sense presenting processing more than once, which series of the force sense presenting processing is composed of the steps of: applying the counterclockwise rotary force to the rotary operation device 13 to rotate the rotary operation device 13 counterclockwise by the predetermined angle in the predetermined time; stopping the applying of the rotary force; after that by applying the clockwise rotary force to the rotary operation device 13 to clockwise rotate the rotary operation device 13 by the predetermined angle in the predetermined time; and then stopping the applying of the rotary force.

Incidentally, in the respective cases of the depression of the left side part, the depression of the right side part, and the depressions of the central part, the way of presenting the force sense may be adapted to be the same, or the way of presenting the force sense may be changed in order that an operator can distinguish the cases of the depression of the left side part, the depression of the right side part, and the depression of the central part to perceive the distinctions of the cases by changing at least any one of the rotating directions, the rotary forces to be applied, the rotating times, the rotating angles, and the number of the times of repeating the force sense presenting processing.

Here, the rotary force to be applied to the rotary operation device 13, the time for which the rotary operation device 13 is rotated (the "predetermined time" mentioned above), and the angle by which the rotary operation device 13 is rotated (the "predetermined angle" mentioned above) are arbitrary as long as they can present the force sense to the operator. To put it concretely, for example, the rotary force to be applied to the rotary operation device 13 is preferably rotary force ≥ 0. 05 Ncm; the time for which the rotary operation device 13 is rotated is preferably 3 msec ≤ time ≤ 6 msec; the angle by which the rotary operation device 13 is rotated is preferably 1 degree ≤ angle ≤ 5 degrees.

The main CPU 341 functions as a force sense presenting section by executing this force sense presenting program 343b6.

The determining program 343b7 enables the main CPU 341 to realize the function of determining the selection of one selection item when the depression the rotary operation device 13 is detected in the state in which the selection item among the plurality of selection items arranged in the screen under display is under selection.

To put it concretely, for example, when the depression of the central part of the rotary operation device 13 is detected, the main CPU 341 determines the selection of the one selection item.

Here, the main CPU 341 is configured in order that, when the selection of one selection item in the main menu screen (first selection item) is determined, the main CPU 341 executes the screen switch instructing program 343b5 to switch the screen under display (main menu screen) to the submenu screen corresponding to the one selection item. At the time of the switching to the submenu screen, the selection item under selection is switched to, for example, the second selection item arranged in (1, 1) in the submenu screen of the switching destination.

Moreover, when the selection of the one selection item (second selection item) in the submenu screen is determined, the main CPU 341 executes the function of the cellular phone handset 1 corresponding to the one selection item.

The main CPU 341 functions as a determination section by executing this determining program 343b7.

Here, in the present embodiment, the rotary input device 10 also includes the main control section 34 besides the rotation detecting section 14, the ultrasonic motor 16, the depression detecting section 20, the control section 21, the input/output section 22, and the like.

### (Switching Processing)

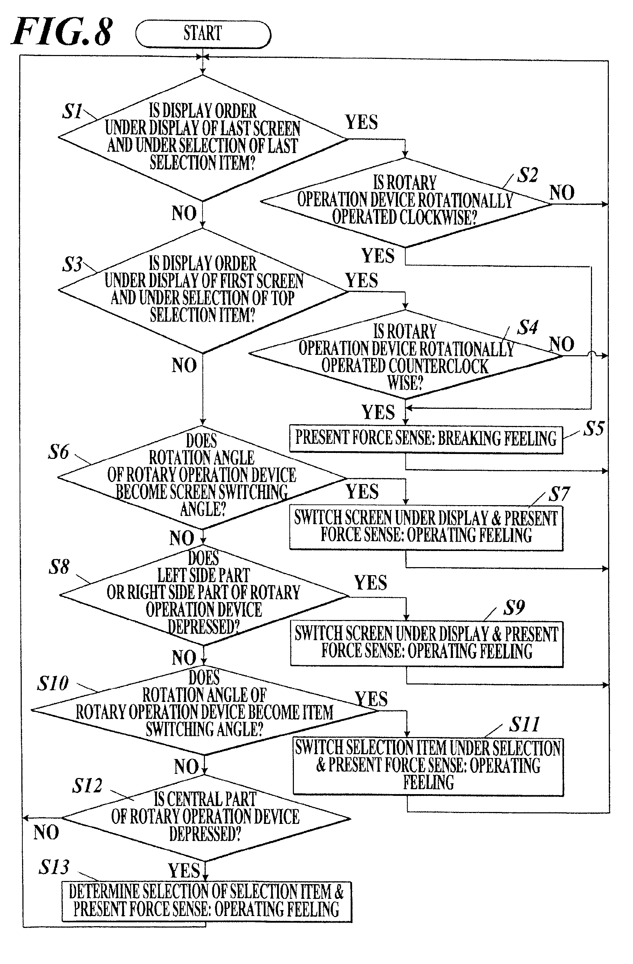

Next, the processing pertaining to the switching of the selection item under select and the switching of the screen under display by the cellular phone handset 1 of the present embodiment will be described with reference to FIG. 8.

First, the main CPU 341 judges whether the screen of the last display order is under display and the last selection item among the plurality of selection items arranged in the screen is under selection or not (Step S1).

If the main CPU 341 judges that the screen of the last display order is under display and the last selection item among the plurality of selection items arranged in the screen is under display at Step S1 (Step S1; Yes), then the main CPU 341 judges whether the rotary operation device 13 is subjected to a clockwise rotation operation or not on the basis of the detected rotation angle of the rotary operation device 13 (Step S2)

If the main CPU 431 judges that the rotary operation device 13 is not subjected to the clockwise rotation operation at Step S2 (Step S2; No), then the main CPU 341 performs the processing on and after Step S1 repeatedly.

On the other hand, if the main CPU 341 judges that the rotary operation device 13 is subjected to the clockwise rotation operation at Step S2 (Step S2; Yes), the main CPU 341 shifts the processing to that at Step S5.

Moreover, if the main CPU 341 judges that the screen of the last display order is under display and the last selection item among the plurality of selection items arranged in the screen is not under selection at Step S1 (Step S1; No), then the main CPU 341 judges whether the screen of the first display order is under display and the top selection item among the plurality of selection items arranged in the screen is under display or not (Step S3).

If the main CPU 341 judges that the screen of the first display order is under display and the top selection item among the plurality of selection items arranged in the screen is under selection at Step S3 (Step S3; Yes), the main CPU 341 judges whether the rotary operation device 13 is subjected to a counterclockwise rotation operation or not on the basis of the detected rotation angle of the rotary operation device 13 (Step S4).

If the main CPU 341 judges that the rotary operation device 13 is not subjected to the counterclockwise rotation operation at Step S4 (Step S4; No), then the main CPU 341 repeatedly perform the processing on and after Step S1.

On the other hand, if the main CPU 341 judges that the rotary operation device 13 is subjected to the counterclockwise rotation operation at Step S4 (Step S4; Yes), then the main CPU 341 executes the force sense presenting program 343b6 to present a force sense to an operator and thereby give the operator a breaking feeling (Step S5) by the combination of applying a rotary force in the reverse rotation direction to the rotary operation device 13 and stopping the applying of the rotary force, and repeatedly performs the processing on and after Step S1.

Moreover, if the main CPU 431 judges that the screen of the first display order is under display and the top selection item among the plurality of selection items arranged in the screen is not under selection at Step S3 (Step S3; No), then the main CPU 341 judges whether the rotation angle of the rotary operation device 13 reaches the screen switching angle or not on the basis of the detected rotation angle of the rotary operation device 13 (Step S6).

If the main CPU 431 judges that the rotation angle of the rotary operation device 13 reaches the screen switching angle at Step S6 (Step S6; Yes), the main CPU 341 executes the screen switch instructing program 343b5 to switch the screen under display, and executes the force sense presenting program 343b6 to present the force sense to the operator and thereby give the operator an operating feeling by the combination of applying the rotary force in the normal rotation direction to the rotary operation device 13 and stopping applying the rotary force (Step S7), and repeatedly performs the processing on and after Step S1.

On the other hand, if the main CPU 431 judges that the rotation angle does not reach the screen switching angle at Step S6 (Step S6; No), then the main CPU 341 judges whether the depression of the left side part or the right side part of the rotary operation device 13 is detected or not (Step S8).

If the main CPU judges that the depression of the left side part or the right side part of the rotary operation device 13 is detected at Step S8 (Step S8; Yes), then the main CPU 341 executes the screen switch instructing program 343b5 to switch the screen under display, and executes the force sense presenting program 343b6 to present the force sense to the operator and thereby give the operation the operation feeling (Step S9) by the combination of applying the counterclockwise rotary force to the rotary operation device 13 and stopping applying the rotary force, and repeatedly performs the processing on and after Step S1.

Here, if the left side part of the right side part of the rotary operation device 13 is depressed for a long time, then the main CPU 341 switches the screen under display at a screen switching speed according to the magnitude of the detected depression force to present the force sense every switching of the screen under display.

On the other hand, if the main CPU 431 judges that the depression of the left side part or the right side part of the rotary operation device 13 is not detected at Step S8 (Step S8; No), then the main CPU 341 judges whether the rotation angle of the rotary operation device 13 reaches the item switching angle or not on the basis of the detected rotation angle of the rotary operation device 13 (Step S10).

If the main CPU 431 judges that the rotation angle of the rotary operation device 13 reaches the item switching angle at Step S10 (Step S10; No), then the main CPU 341 executes the item switch instructing program 343b4 to switch the selection item under selection, and executes the force sense presenting program 343b6 to present the force sense to the operator and thereby give the operating feeling to the operator (Step S11) by the combination of applying the rotary force in the normal rotation direction to the rotary operation device 13, applying the rotary force in the reverse rotation direction, and stopping applying the rotary force, and performs the processing on and after Step S1.

On the other hand, if the main CPU 431 judges that the rotation angle of the rotary operation device 13 does not reach the item switching angle at Step S10 (Step S10; No), the main CPU 341 judges whether the depression of the central part of the rotary operation device 13 is detected or not (Step S12).

If the main CPU 431 judges that the depression of the central part of the rotary operation device 13 is detected at Step S12 (Step S12; Yes), then the main CPU 341 executes the determining program 343b7 to determine the selection of the selection item under selection, and executes the force sense presenting program 343b6 to present the force sense to the operator and thereby give the operation feeling (Step S13) by the combination of applying the clockwise rotary force to the rotary operation device 13, applying the counterclockwise rotary force to the rotary operation device 13, and stopping applying the rotary force, and performs the processing on and after Step S1 repeatedly.

On the other hand, if the main CPU 431 judges that the depression of the central part of the rotary operation device 13 is not detected at Step S12 (Step S12; No), then the main CPU 341 performs the processing on and after Step S1 repeatedly.

According to the cellular phone handset 1 of the present embodiment described above, a rotary input device is equipped with the rotary operation device 13 rotatable around a shaft by receiving a rotation operation by an operator; the screen information storing file 343a1 to store screen information in association with display orders of displaying screens, the screen information pertaining to the screens including "main menu screen" containing first selection items arranged therein in a matrix and a "submenu screen" provided to each of the first selection items, each "submenu screen" containing second selection items arranged in a matrix, each of the second selection items belonging to a corresponding first selection item; the main CPU 341 executing the display control program 343b3 to make the display section 33 display one of the screens based on the screen information stored in the screen information storing file 343a1, the main CPU 341 to make the display section 33 display a plurality of selection items arranged in a screen under display to be able to distinguish a selection item under selection from other selection items; the main CPU 341 executing the item switch instructing program to instruct the CPU 341 executing the display control program 343b3 to switch the selection item under selection according to rotation of the rotary operation device 13; and the main CPU 341 executing the screen switch instructing program 343b5 to instruct the main CPU 341 executing the display control program 343b3 to switch the screen under display according to the rotation of the rotary operation device 13 in accordance with one of the display orders stored in the screen information storing file 343a1. Then, the CPU 341 executing the item switch instructing program 343b4 performs the instruction of switching the selection item under selection in a predetermined order when the rotary operation device 13 rotates clockwise, and instructs the switching of the selection item under selection in an order reverse to the selection order when the rotary operation device 13 rotates counterclockwise, and the main CPU 341 executing the screen switch instructing program 343b5 instructs the switching of the screen under display from the "main menu screen" to the "submenu screen (telephone)" when the rotary operation device 13 rotates clockwise in a state in which a last first selection item among the plurality of first selection items arranged in the "main menu screen" under display is under selection, and instructs the switching of the screen under display from the "submenu screen (telephone)" to the "main menu screen" when the rotary operation device 13 rotates counterclockwise in the state in which a top second selection item among the plurality of second selection items arranged in the "submenu screen (telephone)" under display is under selection.

That is, only by rotating the rotary operation device 13, it is possible to switch the screen under display from the "main menu screen" (screen containing the higher rank selection items (first selection items) arranged therein in a matrix) to the "submenu screen" (screen containing lower rank selection items (second selection items) arranged therein in a matrix), and it is also possible to switch the screen under display from the "submenu screen" to the "main menu screen." Consequently, it is possible to switch a screen by a simple operation even between images different in the ranks of the selection items arranged therein.

Moreover, in the case of a cellular phone handset provided with a cross button in place of the rotary input device 10, when the selection items are arranged in a matrix, the selection item under selection is resulted in being switched by depressing a "top" button, a "bottom" button, a "left" button, or a "right" button, and it is impossible to operate the selection without viewing the buttons. However, according to the cellular phone handset 1 of the present embodiment, because the selection item under selection can be switched only by rotating the rotary operation device 13, the selection can be performed without viewing the rotary operation device 13, and the cellular phone handset 1 is easy to handle.

Moreover, because an item switching speed and a screen switching speed can be changed by the rotation operation speed of the rotary operation device 13, it is possible to reach a desired selection item at a higher speed, and the cellular phone handset 1 is preferable.

Moreover, according to the cellular phone handset 1 of the present embodiment described above, the cellular phone handset 1 includes: the rotation detection section 14 to detect a rotation angle of the rotary operation device 13 and the main CPU 341 executing the rotation detecting program 343b1; the ultrasonic motor 16 to apply a rotary force to the rotary operation device 13; and the main CPU 341 executing a force sense presenting program 343b6 to apply the rotary force to give the rotary operation device 13 with the ultrasonic motor 16 to present the operator a force sense. Then, the main CPU 341 executing the item switch instructing program 343b4 instructs the switching of the selection item under selection when the detected rotation angel of the rotary operation device 13 reaches an item switching angle; the main CPU 341 executing the screen switch instructing program 343b5 instructs the switching of the screen under display when the detected rotation angle of the rotary operation device 13 reaches a screen switching angle; and the main CPU 341 executing the force sense presenting program 343b6 presents the force sense by means of the combination of at least any two actions of applying the rotary force in a normal rotation direction to the rotary operation device 13 by the ultrasonic motor 16, applying the rotary force in a reverse rotation direction, and stopping applying the rotary force when the detected rotation angle of the rotary operation device 13 reaches the item switching angle, and/or when the detected rotation angle of the rotary operation device 13 reaches the screen switching angle.

That is, it is possible to give an operator a distinct operating feeling at the timing when the rotation angle of the rotary operation device 13 reaches the item switching angle or at the timing when the rotation angle of the rotary operation device 13 reaches the screen switching angle. Consequently, when the operator depresses the central part of the rotary operation device 13 in order to determine a selection, it is possible to enable the operator to perceive the timing of the depression, and the cellular phone handset 1 is easy to handle.

Moreover, according to the cellular phone handset 1 of the present embodiment described above, the main CPU 341 executing the force sense presenting program 343b6 changes a present way of the force sense to enable the operator to perceive the force sense in distinction between a case where the detected rotation angle of the rotary operation device 13 reaches the item switching angle and a case where the detected rotation angle of the rotary operation device 13 reaches the screen switching angle.

To put it concretely, the main CPU 341 presents the force sense by means of the combination of applying the rotary force in the normal rotation direction to the rotary operation device 13 by the ultrasonic motor 16, applying the rotary force in the reverse rotation direction, and stopping applying the rotary force when the detected rotation angle of the rotary operation device 13 reaches the item switching angle, and presents the force sense by means of a combination of applying the rotary force in the normal rotation direction to the rotary operation device 13 by the ultrasonic motor 16, and stopping applying the rotary force when the detected rotation angle of the rotary operation device 13 reaches the screen switching angle.

Consequently, it is possible for an operator to recognize whether the selection item under selection has been switched or whether the screen under display has been changed not only by the operator's visual sensation but also by the operator's sense.

Moreover, according to the cellular phone handset 1 of the present embodiment described above, the main CPU 341 executing the force sense presenting program 343b6 presents the force sense by a combination of applying the rotary force in the reverse rotation direction to the rotary operation device 13 by the ultrasonic motor 16 and stopping applying the rotary force when the rotary operation device 13 clockwise rotates in a state in which a screen of a last display order is under display and a last selection item among a plurality of selection items arranged in the screen is under selection, and/or when the rotary operation device counterclockwise rotates in the state in which a screen of a first display order is under display and a top selection item among the plurality of selection items arranged in the screen is under selection.

Consequently, it is possible for an operator to recognize that, even if the operation rotate the rotary operation device 13 in the same direction any longer, the screen under display (selection item under selection) is not switched not only by the operator's visual sensation but also by the operator's sense.

Moreover, according to the cellular phone handset 1 of the present embodiment described above, the cellular phone hand set 1 includes: the depression detecting section 20 detecting a depression of the rotary operation device 13 in an axial direction and the main CPU 341 executing the depression detecting program 343b2; and the main CPU 341 executing the determining program 343b7 to determine a selection of one selection item when the depression of the rotary operation device 13 is detected in a state in which the one selection item among the plurality of selection items arranged in the screen under display is under selection.

Consequently, because the selection item under selection can be switched by rotating the rotary operation device 13 and a selection can be determined by depressing the rotary operation device 13, the selection of a selection item and the determination of the selection can be performed by an operation using one finger, and the cellular phone handset 1 is easy to handle.

Moreover, according to the cellular phone handset 1 of the present embodiment described above, the depression detection section 20 and the main CPU 341 executing the depression detecting program 343b2 can detect a depressed position of the rotary operation device 13; the main CPU 341 executing the screen switch instructing program 343b5 instructs the switching of the screen under display to a next screen when a depression of the left side part of the rotary operation device 13 is detected, and instructs the switching of the screen under display to a preceding screen when a depression of the right side part of the rotary operation device 13 is detected.

Consequently, the screen under display can be switched not only by the rotation operation of the rotary operation device 13 but also by a depression operation thereof, and the cellular phone handset 1 is easy to handle.

Moreover, according to the cellular phone handset 1 of the present embodiment described above, the depression detection section 20 and the main CPU 341 executing the depression detecting program 343b2 can detect a depression force when the rotary operation device is depressed, and the CPU 341 executing the screen switch instructing program 343b5 instructs the switching of the screen under display at a screen switching speed according to a magnitude of the detected depression force when the depression of the left side part of the rotary operation device 13 is detected, and when the depression of the right side part of the rotary operation device 13 is detected.

Consequently, because the screen switching speed can be changed according to the depression force to the rotary operation device 13, the cellular phone handset 1 can reach a desired selection item at a higher speed, and it is preferable.

Moreover, according to the cellular phone handset 1 of the present embodiment, the main CPU 341 executing the force sense presenting program 343b6 presents the force sense by the combination of applying the clockwise rotary force to the rotary operation device 13 by the ultrasonic motor 16, applying the counterclockwise rotary force, and stopping applying the rotary force when the depression of the left side part of the rotary operation device 13 is detected, when the depression of the right side part of the rotary operation device 13 is detected, and when a depression of the central part of the rotary operation device 13 is detected.

That is, it is possible to give an operator a distinct operating feeling at the timing when the left side part, the right side part, or the central part of the rotary operation device 13 is depressed.

Incidentally, the present invention is not limited to the embodiment described above, but can suitably be changed without departing from the sprit and the scope thereof.

### <First Modification>

Although the embodiment described above does not apply any rotary forces to the rotary operation device 13 when the detected rotation angle of the rotary operation device 13 is an angle other than the item switching angle and the screen switching angle, the present invention is not limited to this configuration. The present invention may also be configured to present the force sense to give an operator an assist feeling by applying the rotary force in the normal rotation direction to the rotary operation device 13 in all of the angles of the detected rotation angles of the rotary operation device 13 other than the item switching angle and the screen switching angle. In this case, it is preferable to make an operator perceive that the screen under display (selection item under selection) is not switched even if the rotary operation device 13 is rotated in the same direction any longer, by applying the operation a breaking feeling by presenting a force sense by stopping applying a rotary force in the normal rotation direction to the rotary operation device 13 by the ultrasonic motor 16, or by the combination of applying the rotary force in the reverse rotation direction and stopping applying the rotary force when the rotary operation device 13 clockwise rotates in the state in which the screen of the last display order is under display and the last selection item among the plurality of selection items arranged in the screen is under selection, and/or when the rotary operation device 13 counterclockwise rotates in the state in which the screen of the first selection display order is under display and the top selection item among the plurality of selection items arranged in the screen is under selection.

Moreover, although, in the embodiment described above, the cellular phone handset 1 is illustrated as the electronic equipment equipped with the rotary input device according to the present invention, the electronic equipment of the present invention is not limited to the cellular phone handset 1, and the present invention can be applied to any kinds of electronic equipment as long as the electronic equipment can perform an input operation with the rotary input device 10. The rotary input device of the present invention may be applied to, for example, the other portable terminal devices, such as a portable audio player and a personal digital assistance (PDA), audio visual (AV) equipment, such as a television receiver, and a personal computer. Moreover, the rotary input device 10 may also be incorporated in the electronic equipment beforehand, or may be used to be connected to the electronic equipment as an external device of a single body.

Moreover, in the embodiment described above, although the optical rotation detecting section 14 composed of the toric code wheel and the photointerrupter is illustrated as the detection section detecting the rotation angle of the rotary operation device 13, the rotation detecting section 14 is an example of the detection section, and any configurations may be used as long as the configurations detect the rotation positions of the rotary operation device 13. For example, a mechanical type (contact type) rotation detecting section, a magnetic type rotation detecting section, an electrostatic type rotation detecting section detecting a position by a change of the electrostatic capacity of the electrodes thereof, and the like can be used.

Furthermore, an absolute type rotary encoder capable of detecting an absolute position in addition to the rotation quantity and the rotation direction of the rotary operation device 13 may be used.

Moreover, although the ultrasonic motor 16 is illustrated as the rotation driving section driving the rotary operation device 13 by rotating it in the embodiment described above, the ultrasonic motor 16 is an example of the rotation driving section, and any configuration may be used as long as the configuration drives the rotary operation device 13 by rotating it. For example, a static actuator performing a drive by the use of the absorption and the repulsion of mutual electrostatic charges as motive power, an electromagnetic actuator performing a drive by using a force generated by a mutual interaction between a magnetic field and electric power, a magnetostrictive actuator, a hydraulic cylinder, a pneumatic cylinder, and the like can be used. Moreover, a rotation driving section transmitting the motive power of an actuator to a driven body, such as the rotary operation device 13, as it is may be used as the control of the drive in the rotation driving section, or a stepping motor operating in proportion to a drive pulse number or the like may be used. Moreover, an actuator performing a drive by rotating a driven body may also be used. Alternatively, a linear actuator performing a drive by moving a driven body linearly may be used.

Moreover, although the embodiment described above illustrates the main menu screen as the kind of the first screen, and illustrates the submenu screen as the kind of the second screen. However, the first and the second screens are not limited to those. If the selection item is hierarchized, then the first screen is a screen in which higher rank selection items (first selection items) are arranged in a matrix, and the second screen is a screen in which the lower rank selection items (second selection items) are arranged in a matrix. As long as such conditions are satisfied, the kinds of the first screen and the second screen are arbitrary.

Moreover, although 4 x 3 matrix-like arrangement is illustrated as the arrangement way of the selection items in the embodiment described above, the arrangement way is not limited to this one, but the arrangement way of the selection items is arbitrary as long as the way is the arrangement way in a two-dimensional matrix.

Moreover, although 12 selection items are arranged in one screen in all of the main menu screen and the submenu screen in the embodiment described above, but the number of the selection items is not limited to 12. The number of the selection items to be arranged may be changed every screen.

Moreover, the screen and the like to be displayed next is made to be visible from the back of the screen under display in the embodiment described above, the present invention is not limited to this method. Only the screen under display may be displayed.

Moreover, although the magnitude of the icon showing the selection item under selection is made to be larger than that of the icons showing the other selection items to display the selection item under selection to be discriminable from the other selection items in the embodiment described above, the present invention is not limited to this display method, but the method of the discrimination is arbitrary as long as the selection item under selection and the other selection items can be distinguished from each other. For example, the color of the icon showing the selection item under selection and the icons showing the other selection items may be differentiated from each other, or only the icon showing the selection item under selection may be made to blink on and off.

Moreover, although the forward direction is illustrated as the clockwise direction and the reverse direction is illustrated as the counterclockwise direction in the embodiment described above, the counterclockwise direction may be set as the forward direction, and the clockwise direction may be set as the reverse direction.

Moreover, although the orders shown by the arrows in FIG. 7 are illustrated as the selection order and the display order in the embodiment described above, the selection order and the display order are not limited these orders, but they are arbitrary. Moreover, the selection item arranged (1, 1) is illustrated as the top selection item, and the selection item arranged at (4, 3) is illustrated as the last selection item. However, the arrangement positions of the top selection item and the last selection item can suitably arbitrarily be changed according to the selection order and the number of the selection items arranged in one screen.

Moreover, although the item switching angle is set as a multiple of 30 degrees and an angle other than the screen switching angle in the embodiment described above, the present invention is not limited to these settings. The item switching angle is arbitrary, and, for example, the item switching angle may be changed every screen according to the kind of the screen, or may be changed every selection item according to the kind of the selection item.

Moreover, although the screen switching angle is set as 360 degrees in the embodiment described above, the present invention is not limited to this setting. The screen switching angle is arbitrary, and, for example, may be changed every screen according to the kind of the screen.

Moreover, although the two pressure sensors 201 fixated at two positions on the left side and the right side of the PCB substrate 182 on the back surface thereof, respectively, are equipped in the depression detecting section 20 in the embodiment described above, the present invention is not limited to this configuration. The number and the fixation positions of the pressure sensors 201 equipped in the depression detecting section 20 are arbitrary as long as the pressure sensors 201 can detect the depressions of at least the left side part (first position), the right side part (second position), and the central part (third position) of the rotary operation device 13.

Moreover, the left side part of the rotary operation device 13 is illustrated as the first position; the right side part of the rotary operation device 13 is illustrated as the second position; and the central part of the rotary operation device 13 is illustrated as the third position in the embodiment described above, but the positions are not limited those positions. The first, second, and third positions are arbitrary as long as they are the predetermined positions in the front surface section 131 equipped by the rotary operation device 13.

Moreover, the force sense presenting way is not limited those of the aforesaid embodiment and the first modification, any way is arbitrarily adopted as long as the way can present the force sense by means of the combination of at least two of applying the clockwise rotary force to the rotary operation device 13, applying the counterclockwise rotary force, and stopping applying the rotary force.

According to the embodiment, there is provided a rotary input device, including: a rotary operation device rotatable around a shaft by receiving a rotation operation by an operator; a storage section to store screen information in association with a display order of displaying screens, the screen information pertaining to the screens including a first screen containing first selection items arranged in a matrix, and a second screen provided to each of the first selection items, each second screen containing second selection items arranged in a matrix, each of the second selection items belonging to a corresponding first selection item; a display control section to make a display section display one of the screens based on the screen information stored in the storage section screen, and to make the display section display a plurality of selection items arranged in a screen under display to be able to distinguish a selection item under selection from other selection items; an item switch instructing section to instruct the display control section to switch the selection item under selection according to rotation of the rotary operation device; and a screen switch instructing section to instruct the display control section to switch the screen under display according to the rotation of the rotary operation device in accordance with the display order stored in the storage section, wherein the item switch instructing section instructs to switch the selection item under selection in a predetermined selection order when the rotary operation device rotates in one direction between a clockwise direction or a counterclockwise direction, and instructs to switch the selection item under selection in an order reverse to the selection order when the rotary operation device rotates in the other direction between both the directions, and the screen switch instructing section instructs to switch the first screen under display to the second screen when the rotary operation device rotates in the one direction in a state in which a last first selection item among the plurality of first selection items arranged in the first screen under display is under selection, and instructs to switch the second screen under display to the first screen when the rotary operation device rotates in the other direction in the state in which a top second selection item among the plurality of second selection items arranged in the second screen under display is under selection.

Preferably, the rotary input device further includes: a detection section to detect a rotation angle of the rotary operation device; a rotation driving section to apply a rotary force to the rotary operation device; and a force sense presenting section to give the rotary force to the rotary operation device with the rotation driving section to present the operator a force sense, wherein the item switch instructing section instructs to switch the selection item under selection when the rotation angel detected by the detection section reaches a predetermined item switching angle, the screen switch instructing section instructs to switch the screen under display when the rotation angle detected by the detection section reaches a predetermined screen switching angle, and the force sense presenting section presents the force sense by means of at least any two actions in a combination of applying the rotary force in a normal rotation direction to the rotary operation device by the rotation driving section, applying the rotary force in a reverse rotation direction, and stopping applying the rotary force when the rotation angle detected by the detection section reaches the predetermined item switching angle, and/or when the rotation angle detected by the detection section reaches the predetermined screen switching angle.

Preferably, the force sense presenting section changes a present way of the force sense to enable the operator to perceive the force sense in distinction between a case where the rotation angle detected by the detection section reaches the predetermined item switching angle and a case where the rotation angle detected by the detection section reaches the predetermined screen switching angle.

Preferably, the force sense presenting section presents the force sense by means of at least any two actions in the combination of applying the rotary force in the normal rotation direction to the rotary operation device by the rotation driving section, applying the rotary force in the reverse rotation direction, and stopping applying the rotary force when the rotation angle detected by the detection section reaches the predetermined item switching angle, and presents the force sense by means of a combination of applying the rotary force in the normal rotation direction to the rotary operation device by the rotation driving section and stopping applying the rotary force when the rotation angle detected by the detection section reaches the predetermined screen switching angle.

Preferably, the force sense presenting section presents the force sense by a combination of applying the rotary force in the reverse rotation direction to the rotary operation device by the rotation driving section and stopping applying the rotary force when the rotary operation device rotates in the one direction in a state in which a screen of a last display order is under display and a last selection item among a plurality of selection items arranged in the screen under display is under selection, and/or when the rotary operation device rotates in the other direction in the state in which a screen of a top display order is under display and a top selection item among the plurality of selection items arranged in the screen is under selection.

Preferably, the force sense presenting section presents the force sense by applying the rotary force in the normal rotation direction to the rotary operation device in all of the rotation angles detected by the detection section other than the predetermined item switching angle and the predetermined screen switching angle, and presents the force sense by stopping applying the rotary force in the normal rotation direction to the rotary operation device by the rotation driving section, or by a combination of applying the rotary force in the reverse rotation direction and stopping applying the rotary force when the rotary operation device rotates in the one direction in a state in which a screen of a last display order is under display and a last selection item among a plurality of selection items arranged in the screen is under selection, and/or when the rotary operation device rotates in the other direction in the state in which a screen of a top display order is under display and a top selection item among the plurality of selection items arranged in the screen is under selection.

Preferably, the rotary input device further includes: a detection section to detect a depression of the rotary operation device in an axial direction; and a determination section to determine a selection of one selection item when the depression is detected by the detection section in a state in which the one selection item among the plurality of selection items arranged in the screen under display is under selection.

Preferably, the detection section can detect a depressed position in the rotary operation device; the screen switch instructing section instructs to switch the screen under display to a next screen when a depression of a predetermined first position of the rotary operation device is detected by the detection section, and instructs to switch the screen under display to a preceding screen when a depression of a predetermined second position of the rotary operation device is detected by the detection section.

Preferably, the detection section can detect a depression force when the rotary operation device is depressed, and the screen switch instructing section instructs to switch the screen under display at a screen switching speed according to a magnitude of the depression force detected by the detection section when the depression of the predetermined first position of the rotary operation device is detected by the detection section, and/or when the depression of the second position of the rotary operation device is detected.

Preferably, the force sense presenting section presents the force sense by at least two actions in the combination of applying the clockwise rotary force to the rotary operation device by the rotation driving section, applying the counterclockwise rotary force, and stopping applying the rotary force when the depression of the first position of the rotary operation device is detected by the detection section, when the depression of the second position of the rotary operation device is detected, and/or when a depression of a third position of the rotary operation device is detected.

There is also provided electronic equipment, including: the rotary input device; and the display section.

According to the present invention, the screen under display can be switched from the first screen (the screen containing higher rank first selection items arranged therein in a matrix) to a second screen (the screen containing lower rank second selection items arranged therein in a matrix) only by rotating the rotary operation device, and also it is possible to switch the screen under display from the second screen to the first screen. Consequently, screens can be switched by a simple operation even between those containing arranged selection items having ranks different from each other.

## Claims

1. A rotary input device, comprising:
a rotary operation device rotatable around a shaft by receiving a rotation operation by an operator;
a storage section to store screen information in association with a display order of displaying screens, the screen information pertaining to the screens including a first screen containing first selection items arranged in a matrix, and a second screen provided to each of the first selection items, each second screen containing second selection items arranged in a matrix, each of the second selection items belonging to a corresponding first selection item;
a display control section to make a display section display one of the screens based on the screen information stored in the storage section screen, and to make the display section display a plurality of selection items arranged in a screen under display to be able to distinguish a selection item under selection from other selection items;
an item switch instructing section to instruct the display control section to switch the selection item under selection according to rotation of the rotary operation device; and
a screen switch instructing section to instruct the display control section to switch the screen under display according to the rotation of the rotary operation device in accordance with the display order stored in the storage section, wherein
the item switch instructing section instructs to switch the selection item under selection in a predetermined selection order when the rotary operation device rotates in one direction between a clockwise direction or a counterclockwise direction, and instructs to switch the selection item under selection in an order reverse to the selection order when the rotary operation device rotates in the other direction between both the directions, and
the screen switch instructing section instructs to switch the first screen under display to the second screen when the rotary operation device rotates in the one direction in a state in which a last first selection item among the plurality of first selection items arranged in the first screen under display is under selection, and instructs to switch the second screen under display to the first screen when the rotary operation device rotates in the other direction in the state in which a top second selection item among the plurality of second selection items arranged in the second screen under display is under selection.

2. The rotary input device according to claim 1, further comprising:
a detection section to detect a rotation angle of the rotary operation device;
a rotation driving section to apply a rotary force to the rotary operation device; and
a force sense presenting section to apply the rotary operation device the rotary force with the rotation driving section to present the operator a force sense, wherein
the item switch instructing section instructs to switch the selection item under selection when the rotation angel detected by the detection section reaches a predetermined item switching angle,
the screen switch instructing section instructs to switch the screen under display when the rotation angle detected by the detection section reaches a predetermined screen switching angle, and
the force sense presenting section presents the force sense by means of at least any two actions in a combination of applying the rotary force in a normal rotation direction to the rotary operation device by the rotation driving section, applying the rotary force in a reverse rotation direction, and stopping applying the rotary force when the rotation angle detected by the detection section reaches the predetermined item switching angle, and/or when the rotation angle detected by the detection section reaches the predetermined screen switching angle.

3. The rotary input device according to claim 2, wherein the force sense presenting section changes a present way of the force sense to enable the operator to perceive the force sense in distinction between a case where the rotation angle detected by the detection section reaches the predetermined item switching angle and a case where the rotation angle detected by the detection section reaches the predetermined screen switching angle.

4. The rotary input device according to claim 3, wherein the force sense presenting section presents the force sense by means of at least any two actions in the combination of applying the rotary force in the normal rotation direction to the rotary operation device by the rotation driving section, applying the rotary force in the reverse rotation direction, and stopping applying the rotary force when the rotation angle detected by the detection section reaches the predetermined item switching angle, and presents the force sense by means of a combination of applying the rotary force in the normal rotation direction to the rotary operation device by the rotation driving section and stopping applying the rotary force when the rotation angle detected by the detection section reaches the predetermined screen switching angle.

5. The rotary input device according to any one of claims 2-4, wherein the force sense presenting section presents the force sense by a combination of applying the rotary force in the reverse rotation direction to the rotary operation device by the rotation driving section and stopping applying the rotary force when the rotary operation device rotates in the one direction in a state in which a screen of a last display order is under display and a last selection item among a plurality of selection items arranged in the screen under display is under selection, and/or when the rotary operation device rotates in the other direction in the state in which a screen of a top display order is under display and a top selection item among the plurality of selection items arranged in the screen is under selection.

6. The rotary input device according to any one of claims 2-4, wherein the force sense presenting section presents the force sense by applying the rotary force in the normal rotation direction to the rotary operation device in all of the rotation angles detected by the detection section other than the predetermined item switching angle and the predetermined screen switching angle, and presents the force sense by stopping applying the rotary force in the normal rotation direction to the rotary operation device by the rotation driving section, or by a combination of applying the rotary force in the reverse rotation direction and stopping applying the rotary force when the rotary operation device rotates in the one direction in a state in which a screen of a last display order is under display and a last selection item among a plurality of selection items arranged in the screen is under selection, and/or when the rotary operation device rotates in the other direction in the state in which a screen of a top display order is under display and a top selection item among the plurality of selection items arranged in the screen is under selection.

7. The rotary input device according to any one of claims 1-6, further comprising:
a detection section to detect a depression of the rotary operation device in an axial direction; and
a determination section to determine a selection of one selection item when the depression is detected by the detection section in a state in which the one selection item among the plurality of selection items arranged in the screen under display is under selection.

8. The rotary input device according to any one of claims 1-7, wherein
the detection section can detect a depressed position in the rotary operation device;
the screen switch instructing section instructs to switch the screen under display to a next screen when a depression of a predetermined first position of the rotary operation device is detected by the detection section, and instructs to switch the screen under display to a preceding screen when a depression of a predetermined second position of the rotary operation device is detected by the detection section.

9. The rotary input device according to claim 8, wherein
the detection section can detect a depression force when the rotary operation device is depressed, and
the screen switch instructing section instructs to switch the screen under display at a screen switching speed according to a magnitude of the depression force detected by the detection section when the depression of the predetermined first position of the rotary operation device is detected by the detection section, and/or when the depression of the second position of the rotary operation device is detected.

10. The rotary input device according to claim 8 or 9, wherein the force sense presenting section presents the force sense by at least two actions in the combination of applying the clockwise rotary force to the rotary operation device by the rotation driving section, applying the counterclockwise rotary force, and stopping applying the rotary force when the depression of the first position of the rotary operation device is detected by the detection section, when the depression of the second position of the rotary operation device is detected, and/or when a depression of a third position of the rotary operation device is detected.

11. Electronic equipment, comprising:
the rotary input device according to any one of claims 1-10; and
the display section.
